# EUROPEAN PATENT APPLICATION

(11) **EP 4 564 872 A1**
(43) Date of publication of application: **04.06.2025**
(21) Application number: 23383240.1
(22) Date of filing: 30.11.2023
(51) Int. Cl.: H04W 12/06, H04W 8/20, H04W 12/30, H04W 12/40, H04W 12/43, G06F 21/12, H04L 9/40, H04W 12/04

(54) **DEVICE-EUICC BINDING**

(71) Applicant: Giesecke+Devrient Mobile Security Germany GmbH, 81677 München (DE)
(72) Inventor: PATIÑO, David, 08820 El Prat de Llobregat (Barcelona) (ES); TOTEV, Georgy, 08820 El Prat de Llobregat (Barcelona) (ES); RUAU, Federico, 08820 El Prat de Llobregat (Barcelona) (ES); LORENTE, Raul, 08820 El Prat de Llobregat (Barcelona) (ES); GIFRE, Clara, 08820 El Prat de Llobregat (Barcelona) (ES)
(74) Representative: LKGLOBAL Lorenz & Kopf Patentanwalt Attorney at Law PartG mbB

(57) **Abstract**

An eUICC - hosting an issuer security domain root, ISD-R, which may be implemented as a root profile; and - hosting, or constructed for hosting, at least one security domain profile, ISD-P, the ISD-P hosting, or constructed for hosting, an operational profile; characterized by: - a device-eUICC binding applet implemented in the issuer security domain root, ISD-R; - the device-eUICC binding applet being constructed to, after each reset of the eUICC, --- effect that the eUICC is in a disabled state, preventing operation of the eUICC in the device; --- output, to a device hosting the eUICC, a request for sending enablement information, and, only when valid enablement information of a target device is received at the eUICC, identify the device hosting the eUICC as the target device, and set the eUICC into an enabled state, so as to enable operation of the eUICC in the device.

## Description

### Field of the invention

The present invention relates to device-eUICC binding.

### Background of the invention and prior art

Mobile devices, which are understood to be devices having ability to communicate in a mobile network, or having the same meaning wireless network, of a mobile network operator, MNO, are operated with an embedded universal integrated circuit card, eUICC, holding one or several MNO owned profiles (subscriber profiles) enabling attachment to and authentication in the mobile network of the respective MNO. The mobile device is often referred to only as device, as compared to the eUICC hosted in the device. Sometimes, the (mobile) device is alternatively referred to as (mobile) terminal.

An eUICC hosts different security domains, including the issuer security domain root, ISD-R, and one or several issuer security domain(s) profile, ISD-P, also referred to as profile container(s). The ISD-R is the entry point to the eUICC via which a profile server, like the SM-DP+, can provision operational profiles to ISD-Ps of the eUICC. In some eUICCs, the ISD-R is implemented as a security domain with only a reduced data set, whereas in some eUICCs the ISD-R is implemented as a complete root profile.

For eUICCs, different form factors are known, including plug-in UICC or SIM card being a removable chipcard hardware insertable to and removable from the mobile device, embedded UICC in a strict sense being a SIM-card-like eUICC constructed to be soldered into a mobile device, and integrated UICC, iUICC, incorporated into the chipset of the mobile device, without having an own hardware. In connection with the present invention, an eUICC is understood to be embodied in any form factor, including plug-in, embedded (soldered in) and integrated.

Different types of mobile device are known, including consumer devices like smartphones or tablets or smartwatches, automotive devices designed to be used in motor powered vehicles, and loT devices designed to be operated in an industrial or smart home environment.

Different types of mobile devices have different security and performance capabilities. Consumer devices typically have high security and performance capabilities, whereas loT devices typically have only poor security and performance capabilities. Within the consumer devices, a smartphone may have higher security and/or performance capability as compared to a smartwatch.

For this and further reasons, for example, an eUICC dedicated to a consumer device like a smartphone or smartwatch shall not be operated in combination with an loT device, since the relatively simple and cheap loT device may be unable to provide the high security and performance capabilities that are assumed to be present at a consumer device. Also other combinations of a device and an eUICC which are not provided by the device or/and eUICC launching company may be unwanted.

Moreover, even different devices of the same type, such as two different smartphone models, can have different needs and security and performance capacities, such that running an eUICC in a smartphone for which it is not intended may lead to an increased risk of malfunctions and can be unwanted.

A dedicated mobile device and a dedicated eUICC are often sold in the market as a bundle, wherein the mobile device and the eUICC have a binding between each other, referred to as device-eUICC binding, and shall be operated together, however not the mobile device in combination with a different eUICC or the eUICC in combination with a different mobile device.

Abusive market participants or private persons might seek to insert a plug-in eUICC into a device not dedicated to be used with said device, or even to solder out soldered-in eUICC from a device and re-solder it into a different device. Irrespective of the form factor of the eUICC, there is a need to prevent circumventing the binding between a device and an eUICC desired by a party launching the eUICC or/and the device to the market.

From the prior art, different device-eUICC binding solutions are known.

Document US9338647B2 from the prior art discloses a device-UICC lock solution with a secret key provided in the UICC and a corresponding verification key, which may be a corresponding public key, provided in a trusted execution environment, TEE, of the device. A lock applet implemented in the device TEE exclusively manages the verification key.

The document EP3384699B1 from the prior discloses a solution for managing operation of profiles in an eUICC hosting at least an operation profile and a root profile. Herein, upon the eUICC receiving a specially parametrized AUTHENTICATE command, the root profile gets temporarily enabled, while the operational profile gets temporarily disabled.

The document EP1976314B1 from the prior art discloses a UICC-device binding solution with synchronized one-time-password, OTP, generators in the UICC and the device.

The solution according to document US9338647B2 requires a trusted execution environment, TEE, to be present in the device, whereas only a small number of mobile devices provides of such a TEE.

The document ETSI TS 102 221 V17.1.0 titled "Smart Cards; UICC-Terminal interface; Physical and logical characteristics (Release 17)", discloses concepts applicable to data and command exchange between an eUICC and a platform, for example a server like an SM-DP+. Chapters 8.7 and 10.3 disclose the concept of logical channels between the eUICC and the platform, whereas chapter 8.9 discloses the concept of secure channels between the eUICC and the platform. According to document ETSI TS 102 221 V17.1.0, chapter 8.7, an eUICC supporting the concept of logical channels shall support a basic channel and at least one additional logical channel.

### Objective of the invention

It is an object of the present invention to provide a device-eUICC binding solution which is secure and at the same time applicable to a broad range of use cases.

### Summary of the invention

The object of the invention is achieved by an eUICC with following features, according to claim 1. Embodiments of the invention are presented in dependent claims.

In greater detail, the object of the invention is achieved by an eUICC,
- hosting an issuer security domain root, ISD-R, which may be implemented as a root profile; and
- hosting, or constructed for hosting, at least one security domain profile, ISD-P, the ISD-P hosting, or constructed for hosting, an operational profile;
   characterized by
- a device-eUICC binding applet implemented in the issuer security domain root, ISD-R;
- the device-eUICC binding applet being constructed to, after each reset of the eUICC,
   --- effect that the eUICC is in a disabled state, preventing operation of the eUICC in the device;
   --- output, to a device hosting the eUICC, a request for sending enablement information, and, only when valid enablement information of a target device is received at the eUICC, identify the device hosting the eUICC as the target device, and set the eUICC into an enabled state, so as to enable operation of the eUICC in the device.

Security of the present solution is achieved in that, after each RESET of the eUICC, the eUICC is first set into a disabled state, and only after the eUICC ensures that the device hosting the eUICC is a valid device, the eUICC is enabled.

In that the device-eUICC is managed by an applet implemented in the issuer security domain root, ISD-R, and every eUICC provides of an issuer security domain root, ISD-R, and every eUICC supports applets, the proposed binding solution is applicable to a broad range of use cases.

Accordingly, the proposed binding solution is both secure and applicable to a broad range of use cases.

The request sent from the eUICC to the device may be or comprise a challenge, and the enablement information sent from the device to the eUICC may be or comprise a signed form of the challenge, signed with an admitted device signature key of an admitted device.

According to some embodiments, the device-eUICC binding applet is constructed to output, to a device hosting the eUICC, said request for sending enablement information, in reply to receiving, from said device, an eUICC-authentication request, requesting the eUICC to provide authentication information to authenticate itself versus the device. According to the here-described embodiments, the device first requests the eUICC to authenticate, before the device accepts to authenticate itself versus the eUICC.

According to some embodiments,
- the request output to the device comprises a eUICC-Challenge in a Challenge-Response procedure, output from the eUICC to the device;
- the enablement information received at the eUICC comprises or is part of a eUICC-Response, which is received at the eUICC from the device, in reply to said eUICC-Challenge.

According to some embodiments,
- the eUICC hosts a target device specific public key, which is part of a public/secret asymmetric key pair which is specific to the target device,
- wherein the request comprises the target device specific public key, and
- the valid enablement information comprises a signature generated with the target device specific secret key corresponding to the target device specific public key.

According to some embodiments including eUICC authentication to the device,
- said eUICC-authentication request comprises or is part of a device-Challenge in a Challenge-Response procedure, output from the device to the eUICC;
- said authentication information received at the device comprises or is part of a eUICC-Response, which is received at the device from the eUICC, in reply to said device-Challenge.

Further according to some embodiments with eUICC authentication to the device,
- the eUICC further hosts an eUICC specific public/secret asymmetric key pair, comprising an eUICC specific secret key and an eUICC specific public key;
- said eUICC-authentication request comprises the eUICC specific public key;
- said authentication information comprises a signature generated with the eUICC specific secret key corresponding to the eUICC specific public key.

According to some embodiments, the valid enablement information comprises a one-time-password, OTP, which is generated by a device OTP-generator implemented in the device which is synchronized with a similar eUICC OTP-generator implemented in the eUICC.

An OTP which is valid only for one single usage, has the additional advantage that malicious catching and storing of the OTP is of no value, since the OTP will have expired after the single allowed usage.

According to some embodiments, the OTP-generator is a HMAC-based OTP-generator, constructed to generate HMAC-based OTPs, wherein valid enablement information is an OTP generated by the eUICC matching an OTP generated by the device, according to predefined matching rules.

According to some embodiments, the valid enablement information comprises a device specific certificate.

According to some embodiments, the device-eUICC binding applet is constructed to prevent enabling the eUICC when any of the received enablement information is not valid a enablement information.

According to some embodiments, the device-eUICC binding applet is constructed to output said request for sending enablement information, and/or to receive from the device said enablement information via a secure channel.

According to some embodiments, the eUICC is constructed to operate at least one logical channel for downloading profiles via the ISD-R to ISD-Ps, wherein the device-eUICC binding applet is constructed to output said request for sending enablement information, and/or to receive from the device said enablement information via a supplementary logical channel which is not used for downloading profiles via the ISD-R to ISD-Ps.

Logical channels are known from the prior art for different purposes, and partly defined or standardized for specific purposes, for example for downloading profiles via the ISD-R to ISD-Ps. Preferably the logical channel used for transferring the device enablement information is a logical channel which is not already occupied by a defined or standardized purpose like downloading profiles via the ISD-R to ISD-Ps, but which is still free. It is proposed to define such a free logical channel as a supplementary (thus an additional) logical channel, in addition to defined or standardized and thus occupied logical channels, which are already occupied for profile download and the like.

An inventive method for effecting device-eUICC binding between an eUICC and a target device comprises:
- providing an eUICC, said eUICC:
- hosting an issuer security domain root, ISD-R, which may be implemented as a root profile; and
- hosting, or constructed for hosting, at least one security domain profile, ISD-P, the ISD-P hosting, or constructed for hosting, an operational profile;
- a device-eUICC binding applet implemented in the issuer security domain root, ISD-R;
- the device-eUICC binding applet, after each reset of the eUICC,
   --- effecting that the eUICC is in a disabled state, preventing operation of the eUICC in the device;
   --- output, to a device hosting the eUICC, a request for sending enablement information, and, only when valid enablement information of a target device is received at the eUICC, identify the device hosting the eUICC as the target device, and set the eUICC into an enabled state, so as to enable operation of the eUICC in the device.

The method is applicable to an eUICC embodied with feature combinations as described above.

### Brief description of the drawings

Embodiments of the invention will now be described with reference to the accompanying drawings, throughout which like parts are referred to by like references, and in which represents:
- Fig. 1: a device-eUICC binding solution, according to a first embodiment of the invention;
- Fig. 2: a device-eUICC binding solution, according to a second embodiment of the invention;
- Fig. 3: a device-eUICC binding solution, according to a third embodiment of the invention;
- Fig. 4: a device-eUICC binding solution, according to a fourth embodiment of the invention.

### Detailed description of the invention

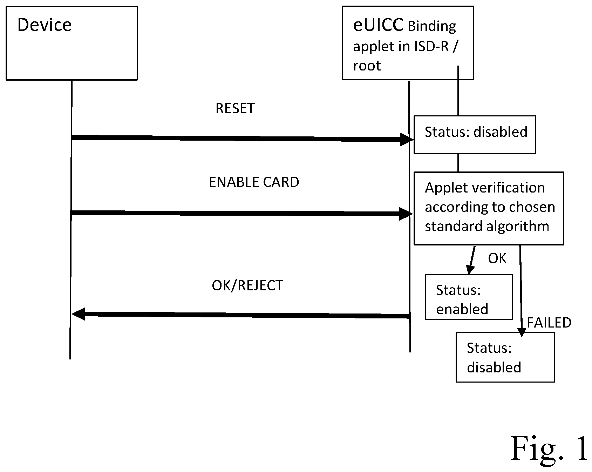

Fig. 1 shows a device-eUICC binding solution, according to a first embodiment of the invention.

Establishment of the device-eUICC binding according to the first embodiment.

The solution according to the first embodiment relies on providing the eUICC with an applet installed in a root profile. Said applet would provide the following functionality: accept an "enable card" command, which may be received via secure channel on a supplementary logical channel.

Verification of the device-eUICC binding according to the first embodiment.

The first embodiment is particularly an embodiment of the invention compliant with at least claim 1.

The eUICC will be set to a "disabled" state on reset of the eUICC and will wait for an enable command to become fully functional.

In detail, according to Fig. 1, the eUICC comprises an ISD-R in which a binding applet is implemented. When the eUICC is operated in the device, the device sends to the eUICC a RESET command. The eUICC receives the RESET command at the ISD-R and provides the RESET command to the binding applet installed in the ISD-R. The binding applet effects that the eUICC enters a disabled state (status). Subsequently, the device sends to the eUICC an ENABLE CARD command, together with device information (which may for example be or comprise a device certificate), which the eUICC receives at its ISD-R, and provides to the binding applet installed in the ISD-R. The binding applet initiates, for the device information, an applet verification according to a chosen standard algorithm, and in case of successful applet verification (device information valid), effects that the eUICC enters an enabled state (status). In case the applet verification fails (device information invalid), the eUICC remains in the disabled stat (status).

This provides device vendors with full flexibility to choose the required security algorithm used for the enable eUICC command. For instance, but not exclusively: single-sided, mutual, with pre-shared keys, certificate-based and so on (SCP03, SCP11x...).

The solution allows as well device vendors to establish a proper key distribution, depending on the requirements of the device in which the eUICC (eSIM) is to be soldered or plugged: unique keys per eUICC/device are one of the options, but shared keys for some group of devices/eUICCs could also be a possibility if needed.

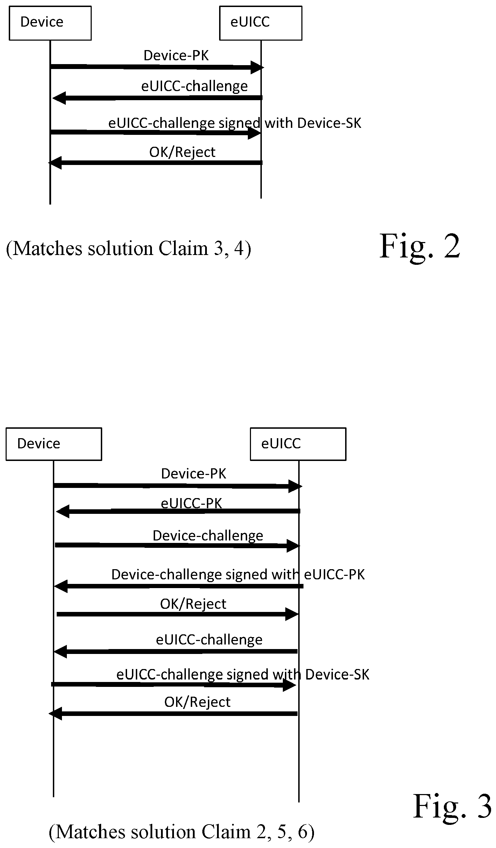

The Idea of the second embodiment (Fig. 2) and third embodiment (Fig. 3) of the invention is the binding assurance for the eUICC and optionally, the device, via public/secret key pairs (public/private key pairs).

The management of the situation in case the check fails is not further detailed, and can be according to known solutions, such as blocking the eUICC, deleting eUICC contents, and the like.

Fig. 2 shows a device-eUICC binding solution, according to a second embodiment of the invention.

The second embodiment according to Fig. 2 is particularly compliant with at least claims 3 and 4.

According to the second embodiment, only the eUICC needs to reject unlawful devices.

Generation of the device-eUICC binding according to the second embodiment.
- Device creates keypair and sends the Device-PK (public key) to eUICC.

Verification of the device-eUICC binding according to the second embodiment.
- eUICC generates eUICC-Challenge and sends all to Device.
- Device signs eUICC-Challenge with Device-SK (secret key) and sends it to eUICC.
- eUICC verifies signed eUICC-Challenge, (if verification fails, eUICC rejects Device with optional retry policy).

Fig. 3 shows a device-eUICC binding solution, according to a third embodiment of the invention

The third embodiment according to Fig. 3 is particularly compliant with at least claims 2, 5 and 6.

Third embodiment: Verification is needed both from the device and by the eUICC.

Generation of the device-eUICC binding according to the third embodiment.
- Device creates keypair and sends the Device-PK (public key) to eUICC.
- eUICC creates keypair and sends the eUICC-PK (public key) to Device.

Verification of the device-eUICC binding according to the third embodiment.
- Device generates Device-Challenge and sends it to eUICC.
- eUICC signs Device-Challenge with eUICC-SK (secret key = private key), generates eUICC-Challenge and sends all to Device.
- Device verifies signed Device-Challenge with eUICC-PK (public key) (if verification fails, Device rejects eUICC with optional retry policy), signs eUICC-Challenge with Device-SK (secret key = private key) and sends it to eUICC.
- eUICC verifies signed eUICC-Challenge, (if verification fails, eUICC rejects Device with optional retry policy).

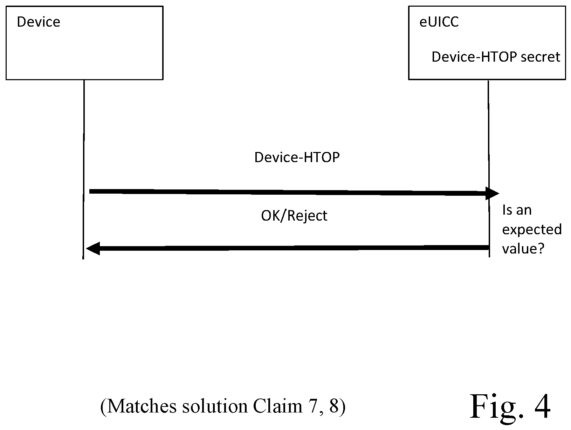

Fig. 4 shows a device-eUICC binding solution, according to a fourth embodiment of the invention.

The fourth embodiment according to Fig. 4 is particularly compliant with at least claims 7 and 8.

The option presented in the fourth embodiment, shown in Fig. 4, has the advantage of being relatively simple and requiring only a relatively light implementation, which might be favorable or even needed for eUICCs with high footprint constraints.

Generation of the device-eUICC binding according to the fourth embodiment.
- Device provisions Device-HOTP (device HMAC-based One-time Password algorithm) secret to eUICC.

Herein, HMAC stands for Hash-based Message Authentication Code.

Verification of the device-eUICC binding according to the fourth embodiment.
- Device generates Device-HOTP and sends it to eUICC.
- eUICC verifies that Device-HOTP matches next expected value (or within a window, accepting getting out of sync due to power-loss).
- If Device-HTOP does not match, eUICC rejects Device.

As an extra embodiment, the mirrored behavior could be added as part of the validation process if it is also a requirement that the Device authenticates the eUICC.

All of this is realized in the eUICC as an applet, loaded in the issuer security domain root, ISD-R. Particularly, the ISD-R can be embodied as a full root profile, wherein in this case the device-eUICC binding applet is implemented in the root profile. To achieve this, management access is granted to the ISD-R (as applicable: access granted to the root profile).

### Cited documents

US9338647B2
EP3384699B1
EP1976314B1
ETSI TS 102 221 V17.1.0

## Claims

1. An eUICC,
- hosting an issuer security domain root, ISD-R, which may be implemented as a root profile; and
- hosting, or constructed for hosting, at least one security domain profile, ISD-P, the ISD-P hosting, or constructed for hosting, an operational profile;
**characterized by**
- a device-eUICC binding applet implemented in the issuer security domain root, ISD-R;
- the device-eUICC binding applet being constructed to, after each reset of the eUICC,
--- effect that the eUICC is in a disabled state, preventing operation of the eUICC in the device;
--- output, to a device hosting the eUICC, a request for sending enablement information, and, only when valid enablement information of a target device is received at the eUICC, identify the device hosting the eUICC as the target device, and set the eUICC into an enabled state, so as to enable operation of the eUICC in the device.

2. The eUICC according to claim 1, wherein the device-eUICC binding applet being constructed to output, to a device hosting the eUICC, said request for sending enablement information, in reply to receiving, from said device, an eUICC-authentication request, requesting the eUICC to provide authentication information to authenticate itself versus the device.

3. The eUICC according to claim 1 or 2, wherein,
- the request output to the device comprises a eUICC-Challenge in a Challenge-Response procedure, output from the eUICC to the device;
- the enablement information received at the eUICC comprises or is part of a eUICC-Response, which is received at the eUICC from the device, in reply to said eUICC-Challenge.

4. The eUICC according to any claim 3, wherein
- the eUICC hosts a target device specific public key, which is part of a public/secret asymmetric key pair which is specific to the target device,
- wherein the request comprises the target device specific public key, and
- the valid enablement information comprises a signature generated with the target device specific secret key corresponding to the target device specific public key.

5. The eUICC according to any of claims 1 to 4 in combination with claim 2, wherein
- said eUICC-authentication request comprises or is part of a device-Challenge in a Challenge-Response procedure, output from the device to the eUICC;
- said authentication information received at the device comprises or is part of a eUICC-Response, which is received at the device from the eUICC, in reply to said device-Challenge.

6. The eUICC according to claim 5, wherein
- the eUICC further hosts an eUICC specific public/secret asymmetric key pair, comprising an eUICC specific secret key and an eUICC specific public key;
- said eUICC-authentication request comprises the eUICC specific public key;
- said authentication information comprises a signature generated with the eUICC specific secret key corresponding to the eUICC specific public key.

7. The eUICC according to any of claims 1 to 6, wherein the valid enablement information comprises a one-time-password, OTP, which is generated by a device OTP-generator implemented in the device which is synchronized with a similar eUICC OTP-generator implemented in the eUICC.

8. The eUICC according to claim 7, wherein the OTP-generator is a HMAC-based OTP-generator, constructed to generate HMAC-based OTPs, wherein valid enablement information is an OTP generated by the eUICC matching an OTP generated by the device, according to predefined matching rules.

9. The eUICC according to any of claims 1 to 8, wherein the valid enablement information comprises a device specific certificate.

10. The eUICC according to any of claims 1 to 9, wherein the device-eUICC binding applet is constructed to prevent enabling the eUICC when any of the received enablement information is not valid a enablement information.

11. The eUICC according to any of claims 1 to 10, wherein the device-eUICC binding applet is constructed to output said request for sending enablement information, and/or to receive from the device said enablement information via a secure channel.

12. The eUICC according to any of claims 1 to 10, wherein the eUICC is constructed to operate at least one logical channel for downloading profiles via the ISD-R to ISD-Ps, wherein the device-eUICC binding applet is constructed to output said request for sending enablement information, and/or to receive from the device said enablement information via a supplementary logical channel which is not used for downloading profiles via the ISD-R to ISD-Ps.

13. A method for effecting device-eUICC binding between an eUICC and a target device, comprising:
- providing an eUICC, said eUICC:
- hosting an issuer security domain root, ISD-R, which may be implemented as a root profile; and
- hosting, or constructed for hosting, at least one security domain profile, ISD-P, the ISD-P hosting, or constructed for hosting, an operational profile;
**characterized by**
- a device-eUICC binding applet implemented in the issuer security domain root, ISD-R;
- the device-eUICC binding applet, after each reset of the eUICC,
--- effecting that the eUICC is in a disabled state, preventing operation of the eUICC in the device;
--- output, to a device hosting the eUICC, a request for sending enablement information, and, only when valid enablement information of a target device is received at the eUICC, identify the device hosting the eUICC as the target device, and set the eUICC into an enabled state, so as to enable operation of the eUICC in the device.

14. The method according to claim 13, wherein the eUICC is further embodied with a feature combination according to any of claims 1 to 12.
